# EUROPÄISCHE PATENTANMELDUNG

(11) **EP 4 599 966 A1**
(43) Veröffentlichungstag der Anmeldung: **13.08.2025**
(21) Anmeldenummer: 24157088.6
(22) Anmeldetag: 12.02.2024
(51) Int. Cl.: B23D 25/12

(54) **ROTATIONSSCHERE MIT ERWEITERTEM EINSATZBEREICH**

(71) Anmelder: Primetals Technologies Austria GmbH, 4031 Linz (AT)
(72) Erfinder: Baumgartner, Kerstin, Katsdorf (AT); Fürst, Heinz, Gallneukirchen (AT); Preuler, Lukas, Randegg (AT); Schwarz, Gero, Attnang-Puchheim (AT)
(74) Vertreter: Metals@Linz

(57) **Zusammenfassung**

Die Erfindung betrifft eine Rotationsschere (10) zum Trennen eines durchlaufenden Walzprodukts (12). Diese Rotationsschere (10) weist einen oberhalb einer Durchlaufebene (14) angeordneten ersten Messerhalter (16) auf, welcher mit zwei Obermessern (20) versehen ist. Des Weiteren weist diese Rotationsschere (10) einen unterhalb der Durchlaufebene (14) angeordneten weiteren Messerhalter (18) auf, welcher mit zwei Untermessern (22) versehen ist. Zum Zwecke eines Trennens des Walzprodukts (12) in einer Richtung quer zu einer Durchlaufrichtung (24) des Walzprodukts (12) ist jeweils paarweise eines der zwei Obermesser (20) und eines der zwei Untermesser (22) vorgesehen.

## Beschreibung

### Gebiet der Technik

Die Erfindung betrifft eine Rotationsschere, eine Walzvorrichtung sowie ein Verfahren zum Betrieb der Rotationsschere.

### Stand der Technik

Walzprodukte werden nach einem Durchlaufen einer Fertigwalzgerüstgruppe üblicherweise auf Haspeln aufgerollt, um sie zu lagern oder zu transportieren. Zur einfacheren Handhabung werden diese Haspeln unterhalb einer Durchlaufebene des Walzprodukts angeordnet. Daher wird dieser Vorgang im Englischen häufig als 'downcoiling' bezeichnet. Sobald eine maximale Aufnahmekapazität einer Haspel erreicht ist, muss das Walzprodukt unterbrochen werden und ein folgender Abschnitt des Walzprodukts einer leeren Haspel zugeführt werden. Üblicherweise werden zu diesem Zweck Hochgeschwindigkeitsscheren verwendet. Bei zunehmender Dicke eines zu trennenden Walzprodukts wird jedoch eine maximale technische Belastbarkeit der Hochgeschwindigkeitsschere erreicht. Gängige Walzprodukte mit einer Dicke von 4 mm bis 30 mm oder mehr, können üblicherweise nicht mehr mit einer Hochgeschwindigkeitsschere getrennt werden. Um dennoch Walzprodukte mit verschiedenen Dicken herstellen und trennen zu können, ist es bereits bekannt, aufeinanderfolgend zwei Scheren vorzusehen. Diese zwei Scheren weisen einen sich ergänzenden Schnittbereich auf, wodurch sowohl dünne als auch dicke Bänder im Rahmen der maximalen technischen Belastbarkeit einer jeweiligen Schere getrennt werden können.

Zudem tritt im Falle von steigenden Zieldicken eines Walzprodukts das Problem auf, dass Dicken eines Zwischenbands einen Wert von größer 45 mm aufweisen können. Eine üblicherweise im Fehlerfall vorgesehene Auftrennung des Zwischenbands ist bei der genannten Dicke des Zwischenbands mit herkömmlich verfügbaren Trennvorrichtungen nicht in ausreichender Geschwindigkeit während eines Weiterbetriebs einer Walzvorrichtung oder einer kombinierten Gießwalzanlage möglich. Bislang muss daher zunächst ein Betrieb unterbrochen und daraufhin eine Auftrennung, beispielweise mittels eines Plasmaschneiders, durchgeführt werden. Dieses Vorgehen führt zu einer langzeitigen Betriebsunterbrechung und damit zu einem hohen Produktionsausfall sowie zu einem ineffizienten Betrieb. Zudem ist im Falle von Walzprodukten mit zunehmender Zieldicke und/oder zunehmender Festigkeit eine erhöhte Anzahl an Probenahmen zum Zwecke einer Qualitätssicherung vorgeschrieben. Eine Probenahme wird zumeist erst nach einem bereits erfolgten Aufrollen des Walzprodukts auf eine Haspel durchgeführt. Folglich muss zum Zwecke der Probenahme ein Teil des aufgerollten Walzprodukts abgerollt und daraufhin abgeschnitten werden, um dies einer Qualitätskontrolle zuführen zu können. Um eine große Anzahl an Proben bereitstellen zu können, ist daher einen erheblicher Zeit- und Kostenaufwand erforderlich.

### Zusammenfassung der Erfindung

Der vorliegenden Erfindung liegt die Aufgabe zugrunde, einen betriebssicheren und aufwandsgünstig betreibbaren Herstellungsvorgang von Walzprodukten zu ermöglichen. Insbesondere liegt der vorliegenden Erfindung die Aufgabe zugrunde, eine Trennung von Walzprodukten mit großer Zieldicke und/oder hoher Festigkeit in rascher Zeitabfolge zu ermöglichen.

Diese Aufgabe wird gelöst durch eine Rotationsschere zum Trennen eines durchlaufenden Walzprodukts mit den Merkmalen des Anspruchs 1. Des Weiteren wird diese Aufgabe gelöst durch eine Walzvorrichtung mit den Merkmalen des nebengeordneten gegenständlichen Anspruchs. Ferner wird diese Aufgabe gelöst durch ein Verfahren zum Betrieb einer Rotationsschere mit den Merkmalen des nebengeordneten Verfahrensanspruchs.

Vorteilhafte Weiterbildungen sind jeweils Gegenstand abhängiger Unteransprüche.

Die erfindungsgemäße Rotationsschere zum Trennen eines durchlaufenden Walzprodukts weist einen oberhalb einer Durchlaufebene angeordneten ersten Messerhalter auf. Dieser erste Messerhalter ist mit zwei Obermessern versehen. Des Weiteren weist die Rotationsschere einen unterhalb der Durchlaufebene angeordneten weiteren Messerhalter auf. Dieser weitere Messerhalter ist mit zwei Untermessern versehen. Zum Zwecke eines Trennens des Walzprodukts in einer Richtung quer zu einer Durchlaufrichtung des Walzprodukts ist jeweils paarweise eines der genannten zwei Obermesser und eines der genannten zwei Untermesser vorgesehen. Vorzugsweise ist die Rotationsschere dazu eingerichtet, das Walzprodukt in einer Richtung im Wesentlichen senkrecht zu der Durchlaufrichtung des Walzprodukts zu trennen. Zweckmäßigerweise erstreckt sich die Durchlaufebene zwischen dem ersten Messerhalter und dem weiteren Messerhalter.

Dies ermöglicht es, Walzprodukte mit Dicken aus einem Wertebereich von einschließlich 4 mm bis einschließlich 30 mm in rascher zeitlicher Abfolge zu trennen. Genannte oder darüber hinausgehende Variationen der möglichen zu trennenden Dicke können aufgrund einer Variation einer Festigkeit des Walzprodukts abweichen. Die Rotationsschere eignet sich ferner bevorzugt zum Zwecke eines Ausbildens von Abschnitten des Walzprodukts mit einer Länge von vorteilhafterweise weniger als 1 m. Dadurch kann beispielsweise eine Probenahme während eines Betriebs einer Walzvorrichtung oder während eines Betriebs einer kombinierten Gießwalzanlage erfolgen. Auf eine separate Probenahme sowie eine möglicherweise separat vorgesehene Probenahmevorrichtung kann verzichtet werden. Ferner kann dadurch für eine Probenahme auf ein Abrollen eines bereits aufgerollten Walzprodukts verzichtet werden. Dies ermöglicht es des Weiteren, eine aufwandsgünstige und kostengünstige Probenahme durchzuführen. Ferner kann die Rotationsschere im Fehlerfall zum Zwecke eines Häckselns des Walzprodukts eingesetzt werden. Ein Weiterbetrieb eines Herstellungsvorgangs kann dadurch auch im Fehlerfall ermöglicht werden.

Eine vorteilhafte Weiterbildung sieht vor, dass die zwei Obermesser relativ zueinander im Wesentlichen um einen Winkel von 180° um einen Drehpunkt des ersten Messerhalters versetzt angeordnet sind. Alternativ oder zusätzlich sind die zwei Untermesser relativ zueinander im Wesentlichen um einen Winkel von 180° um einen Drehpunkt des weiteren Messerhalters versetzt angeordnet. Auf diese Weise kann ein größtmöglicher Beschleunigungsweg für jedes der zwei Obermesser und/oder der zwei Untermesser bereitgestellt werden. Rasch aufeinanderfolgende Trennschnitte können dadurch zuverlässig und effizient durchgeführt werden.

Vorzugsweise weist die Rotationsschere eine Entnahmevorrichtung auf, mittels welcher durch die Rotationsschere abgetrennte Abschnitte des durchlaufenden Walzprodukts aufnehmbar sind. Diese Entnahmevorrichtung ist besonders bevorzugt unterhalb der Durchlaufebene angeordnet. Dadurch kann eine gezielte Probenahme zum Zwecke einer Qualitätssicherung realisiert werden. Diese kann insbesondere zu einem vorbestimmten und weitestgehend frei wählbaren Zeitpunkt erfolgen. Ferner können auf diese Weise große Materialmengen im Fehlerfall gesammelt und bevorzugterweise maschinell abtransportiert werden.

In einer anderen vorteilhaften Weiterbildung weist die Rotationsschere eine Markiervorrichtung auf. Mittels der Markiervorrichtung ist ein Identifizierungsmerkmal an einem abgetrennten Abschnitt des Walzprodukts anbringbar. Dadurch können einzelne Abschnitte im Hinblick auf Produktqualität, Herstellungsdatum und/oder Chargennummer auf einfache Weise eingeordnet werden. Eine Probenahme zum Zwecke einer Qualitätssicherung ist dadurch zuverlässig realisierbar. Ferner kann auf diese Weise die Probenahme auf einfache Weise korrekt dokumentiert und eine Qualitätssicherung damit zuverlässig nachvollzogen werden.

Vorzugsweise ist die Markiervorrichtung als eine separate Vorrichtung ausgeführt. Auf diese Weise kann bedarfsgerecht ein Identifizierungsmerkmal an einem abgetrennten Abschnitt des Walzprodukts angebracht werden.

Ferner sieht eine vorteilhafte Weiterbildung vor, dass die Rotationsschere eine Hebevorrichtung aufweist. Mittels der Hebevorrichtung ist vorliegend ein Abschnitt des Walzprodukts über die Durchlaufebene anhebbar. Ein Abschnitt des Walzprodukts kann somit angehoben werden, um nachfolgende Abschnitte eines durchlaufenden Walzprodukts nicht zu behindern. Auf diese Weise können nachfolgende Abschnitte des durchlaufenden Walzprodukts einfach unter den angehobenen Abschnitt geleitet und dort vorzugsweise entnommen werden. Dieses Vorgehen eignet sich insbesondere, um im Fehlerfall einen Weiterbetrieb zu ermöglichen. Im bevorzugten Anwendungsfall ist die genannte Rotationsschere einem Fertigwalzgerüst nachgeordnet. In der Regel ist dort bereits eine Zieldicke des Walzprodukts erreicht. Dadurch kann eine erforderliche Scherkraft kleingehalten werden. Zudem kann in diesem Falle auch bei großen Dicken eines Zwischenbands, beispielsweise von größer 45 mm, auf diese Weise überhaupt erst eine Unterbrechung eines vorgelagerten Herstellungsvorgangs vermieden werden.

Überdies sieht die Erfindung eine Walzvorrichtung vor, welche die erfindungsgemäße Rotationsschere aufweist.

Die erfindungsgemäße Walzvorrichtung weist des Weiteren eine Haspel zur Aufnahme eines Walzprodukts sowie mehrere Walzgerüstgruppen auf. Bei der erfindungsgemäßen Walzvorrichtung ist die genannte Rotationsschere zwischen einer letzten der mehreren Walzgerüstgruppen sowie der wenigstens einen Haspel angeordnet. Dies ermöglicht eine zuverlässige Trennung eines Walzprodukts mit einer erhöhten mechanischen Festigkeit und/oder großen Zieldicken, wie beispielsweise Dicken mit einem Wert von 4 mm bis 30 mm oder mehr. Eine Anordnung der Rotationsschere nach der Fertigwalzgerüstgruppe ermöglicht es, effizient und energiesparend Proben eines Walzprodukts auszusondern. Dadurch kann eine Produktqualität einfach und zuverlässig überwacht und verbessert werden. Ein Ausschuss kann kleingehalten werden. Ferner kann dadurch eine hohe Produktivität erreicht werden. Überdies kann im Fehlerfall mittels der Rotationsschere rasch und zuverlässig ein Materialstau aufgelöst werden. Dadurch kann auf einfache Weise ein Weiterbetrieb eines Herstellungsvorgangs und damit einer Walzvorrichtung und/oder einer Gießwalzanlage mit der Walzvorrichtung ermöglicht werden.

Vorzugsweise ist die erfindungsgemäße Walzvorrichtung Teil einer Gießwalzanlage. Besonders bevorzugt handelt es sich bei der letzten Walzgerüstgruppe um eine Fertigwalzgerüstgruppe.

Mittels des erfindungsgemäßen Verfahrens kann die erfindungsgemäße Rotationsschere betrieben werden.

Das erfindungsgemäße Verfahren sieht vor, dass ein Walzprodukt in einer Richtung quer zu dessen Durchlaufrichtung durch die Rotationsschere mittels eines von zwei auf einem ersten Messerhalter angeordneten Obermessern und eines von zwei auf einem weiteren Messerhalter angeordneten Untermessern getrennt wird. Auf diese Weise können Trennvorgänge in rascher Zeitabfolge realisiert werden. Überdies können kurze Abschnitte eines Walzprodukts, vorzugsweise mit einer Länge von weniger als 1 m, erzeugt werden. Eine für große Zieldicken und/oder hohe Festigkeiten vorgesehene zweite Schere mit einem ergänzenden Schnittbereich, kann auf diese Weise entfallen.

Eine vorteilhafte Weiterbildung des Verfahrens sieht vor, dass das Walzprodukt nach einer Bearbeitung in einer Fertigwalzgerüstgruppe getrennt wird. Das Walzprodukt kann dadurch nach einem Erreichen eine Zieldicke und damit bei einer geringsten Dicke getrennt werden. Dies ermöglicht ein effizientes und energiesparendes Trennen. Ferner kann dadurch eine Lebensdauer der Rotationsschere verlängert werden.

Eine weitere vorteilhafte Weiterbildung des Verfahrens sieht vor, dass ein Walzprodukt mit einer Dicke von mindestens 4 mm, getrennt wird. Vorzugsweise wird ein Walzprodukt mit einer Dicke von mindestens 15 mm und besonders bevorzugt von mindestens 25 mm getrennt. Eine Betriebsunterbrechung zum Zwecke einer Trennung von dicken Walzprodukten kann dadurch vermieden werden. Ein Herstellungsvorgang kann dadurch gleichermaßen für dicke als auch für dünne Walzprodukte kontinuierlich betrieben werden. Im bevorzugten Anwendungsfall kann auf diese Weise ein Arbeitsbereich einer Ausfuhreinrichtung aufwandsgünstig freigeschafft oder gar auf die Ausfuhreinrichtung verzichtet werden. Im vorliegenden Zusammenhang handelt es sich bei der Ausfuhreinrichtung um eine Vorrichtung, welche zweckmäßigerweise zwischen einer Vorwalzgerüstgruppe und einer Fertigwalzgerüstgruppe angeordnet ist und dazu eingerichtet ist, im Fehlerfall eine Aussonderung von Teilen und/oder Abschnitten des Walzprodukts aus einem Herstellungsvorgang zu ermöglichen. Häufig wird diese Ausfuhreinrichtung als Pusher-Piler bezeichnet.

Ferner sieht eine vorteilhafte Weiterbildung des Verfahrens vor, dass der von dem Walzprodukt abgetrennte Abschnitt mit einem Identifizierungsmerkmal versehen wird. Ein derart markierter Abschnitt kann daraufhin beispielsweise im Hinblick auf eine Produktqualität, ein Herstellungsdatum und/oder eine Chargennummer aufwandsgünstig identifiziert werden. Der Abschnitt kann dadurch zum Zwecke einer Qualitätssicherung zuverlässig identifiziert werden. Eine Probenahme wird dadurch vereinfacht und kann vorteilhafterweise prozesssicher nachvollzogen werden. Ferner ist auf diese Weise eine separate Probenahme und/oder eine separate diesbezüglich vorgesehene Vorrichtung entbehrlich. Insbesondere kann dadurch auf ein Abrollen eines bereits auf eine Haspel aufgerollten Walzprodukts zum Zwecke der Probenahme verzichtet werden.

Zweckmäßigerweise wird das Walzprodukt in einem Betriebszustand erster Art getrennt, bevor eine maximale Aufnahmekapazität einer Haspel erreicht wird. Auf diese Weise kann eine universell für vielfältige Zieldicken und/oder Festigkeiten eines Walzprodukts verwendbare Trennvorrichtung bereitgestellt werden.

Eine andere vorteilhafte Weiterbildung sieht vor, dass in einem Betriebszustand zweiter Art von einem Walzprodukt kurze Abschnitte mit einer Länge von höchstens 2 m abgetrennt werden. Vorzugsweise werden in dem Betriebszustand zweiter Art von dem Walzprodukt kurze Abschnitte mit einer Länge von höchstens 1 m und besonders bevorzugt von höchstens 0,5 m abgetrennt. Eine Probenahme zum Zwecke einer Qualitätskontrolle kann anhand der kurzen Abschnitte auf einfache Weise während eines Betriebs der Walzvorrichtung und/oder einer Gießwalzanlage durchgeführt werden. Ferner kann im Fehlerfall, beispielsweis im Falle einer stagnierenden Abfuhr des Walzprodukts auf eine Haspel, ein nachfolgendes Walzprodukt in kurze Abschnitte zerteilt werden. Ein kontinuierlicher Weiterbetrieb der Walzvorrichtung oder einer gegebenenfalls vorgelagerten kombinierten Gießwalzanlage, kann dadurch auf eine zuverlässige Weise realisiert werden.

Eine vorteilhafte Ausführungsvariante sieht vor, dass die kurzen Abschnitte nach einem Trennen entnommen werden, und zwar vorzugsweise derart, dass die kurzen Abschnitte unter die Durchlaufebene geleitet werden. Dies ermöglicht es, eine einfach handhabbare Probenahme zum Zwecke einer Qualitätssicherung zu realisieren. Überdies können im Fehlerfall kurze Abschnitte rasch und aufwandsgünstig abtransportiert werden. Der bereits zuvor genannte kontinuierliche Weiterbetrieb der Walzvorrichtung oder einer gegebenenfalls vorgelagerten kombinierten Gießwalzanlage kann auch für größere anfallende Materialmengen ermöglicht werden.

Vorzugsweise wird ein Abschnitt des Walzprodukts über eine Durchlaufebene angehoben. Einer Behinderung eines Weiterbetriebs der Walzvorrichtung oder einer kombinierten Gießwalzanlage aufgrund eines sich in der Durchlaufebene befindlichen Abschnitts des Walzprodukts, welcher im Fehlerfall an einem Weitertransport gehindert wird, kann dadurch auf einfache Weise entgegengewirkt werden.

Vorteilhafterweise werden die kurzen Abschnitte einer Entnahmevorrichtung zugeführt. Dadurch kann eine gezielte Aussonderung einer Probe des Walzprodukts zum Zwecke einer Qualitätssicherung bereitgestellt werden. Zudem können auf diese Weise große Materialmengen im Fehlerfall gesammelt und bevorzugterweise maschinell abtransportiert werden.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Figuren näher erläutert wird. Bei den Figuren handelt es sich um schematische und nicht maßstabsgetreue Zeichnungen. Es zeigen:
- FIG 1: ein Ausführungsbeispiel einer erfindungsgemäßen Walzvorrichtung aufweisend ein Ausführungsbeispiel einer erfindungsgemäßen Rotationsschere;
- FIG 2: das Ausführungsbeispiel der erfindungsgemäßen Rotationsschere in einer Detailansicht;
- FIG 3: eine Illustration eines Beispiels eines erfindungsgemäßen Verfahrens zum Betrieb der erfindungsgemäßen Rotationsschere anhand eines schematischen Ablaufdiagramms.

Soweit zweckdienlich, werden in den Figuren dieselben Bezugszeichen für dieselben oder einander entsprechende Elemente der Erfindung verwendet.

### Beschreibung der Ausführungsformen

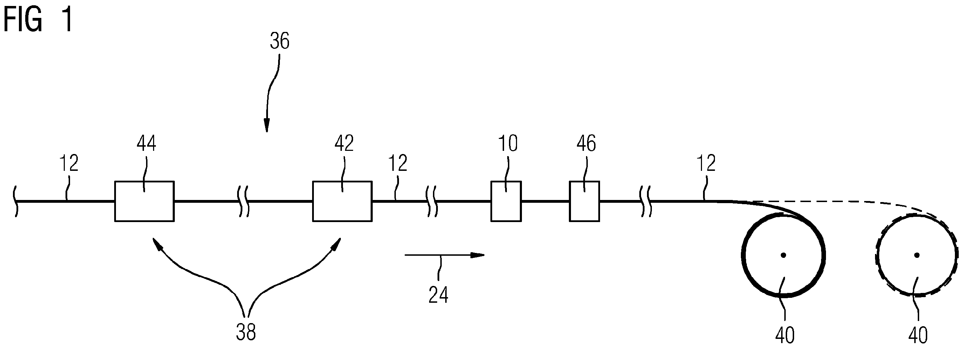

Figur 1 zeigt ein Ausführungsbeispiel einer Walzvorrichtung 36 in einer schematischen Darstellung, welche beispielhaft Teil einer nicht näher dargestellten Gießwalzanlage ist. Der Übersichtlichkeit halber werden Bestandteile der Gießwalzanlage sowie übliche Bestandteile einer Walzvorrichtung, wie beispielsweise eine Heizvorrichtung, eine Kühlvorrichtung oder eine Ausfuhreinrichtung, nicht näher dargestellt.

Das Ausführungsbeispiel der Walzvorrichtung 36 weist mehrere Walzgerüstgruppen 38 auf. Beispielhaft weist die Walzvorrichtung 36 eine Vorwalzgerüstgruppe 44 sowie eine Fertigwalzgerüstgruppe 42 auf. Nach einer Bearbeitung eines Walzprodukts 12 mittels der Fertigwalzgerüstgruppe 42 ist im vorliegenden Zusammenhang eine Zieldicke dieses Walzprodukts 12 erreicht. Des Weiteren weist das vorliegend beschriebene Ausführungsbeispiel der Walzvorrichtung 36 zwei Haspeln 40 auf. Diese sind dazu vorgesehen, ein fertiges Walzprodukt 12 aufzunehmen, wobei das Walzprodukt 12 mittels Biegen auf eine der beiden Haspeln 40 aufgerollt wird, bis eine maximale Kapazität derselben erreicht ist. Zwischen der Fertigwalzgerüstgruppe 42 und den beiden Haspeln 40 ist im vorliegenden Ausführungsbeispiel der Walzvorrichtung 36 eine Rotationsschere 10 angeordnet. In einer Durchlaufrichtung 24 ist nachfolgend zu der Rotationsschere 10 eine Hochgeschwindigkeitsschere 46 vorgesehen. Ein Trennen eines mittels der Walzvorrichtung 36 erzeugten Walzprodukts 12 erfolgt wahlweise mit der Rotationsschere 10 bei Zieldicken von beispielhaft einschließlich 4 mm bis einschließlich 30 mm. Wird ein Walzprodukt 12 mit einer Zieldicke von beispielsweise kleiner 4 mm hergestellt, so wird die Hochgeschwindigkeitsschere 46 verwendet. Die angegebenen Werte oder Wertebereiche für die Zieldicke und die damit verknüpfte Verwendung der unterschiedlichen Scheren können in Abhängigkeit einer Festigkeit des zu trennenden Walzprodukts 12 variieren.

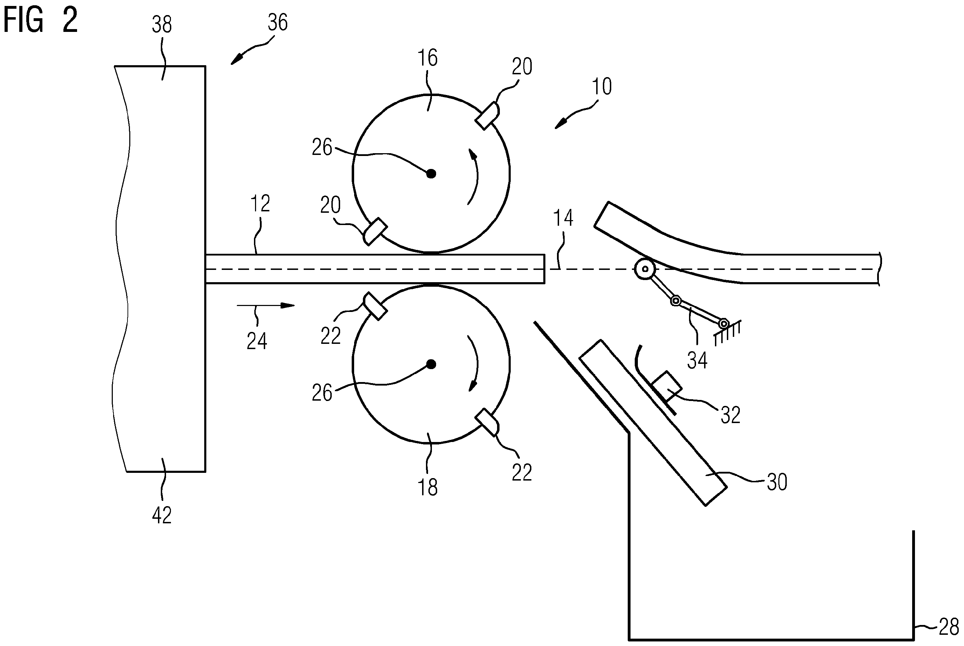

Figur 2 zeigt eine Detailansicht eines Ausführungsbeispiels der Rotationsschere 10. Die Rotationsschere 10 weist einen ersten Messerhalter 16 und einen weiteren Messerhalter 18 auf. Die beiden Messerhalter 16, 18 sind derart voneinander beabstandet, dass ein zu trennendes Walzprodukt 12 entlang einer Durchlaufebene 14 die Rotationsschere 10 durchlaufen kann. Der erste Messerhalter 16 ist oberhalb der Durchlaufebene 14 angeordnet. Des Weiteren weist der erste Messerhalter 16 zwei Obermesser 20 auf, welche im vorliegenden Ausführungsbeispiel relativ zueinander um 180° um einen Drehpunkt 26 des ersten Messerhalters 16 versetzt angeordnet sind. Der weitere Messerhalter 18 ist unterhalb der Durchlaufebene 14 angeordnet und weist zwei Untermesser 22 auf. Diese zwei Untermesser 22 sind relativ zueinander um einen Winkel von 180° um einem Drehpunkt 26 des weiteren Messerhalters 18 versetzt angeordnet.

Während eines Betriebs der Rotationsschere 10 rotiert der erste Messerhalter 16 gegenläufig zum weiteren Messerhalter 18. Zum Zwecke eines Trennens des die Rotationsschere 10 durchlaufenden Walzprodukts 12 in einer Richtung quer zu einer Durchlaufrichtung 24 des Walzprodukts 12 ist jeweils paarweise eines der zwei Obermesser 20 und eines der zwei Untermesser 22 vorgesehen. Um dicke Walzprodukte 12 trennen zu können, ist eine nicht näher dargestellte Antriebsvorrichtung der Rotationsschere 10 derart ausgeführt, dass paarweise vorgesehene Obermesser 20 und Untermesser 22 über einen Winkelbereich von weniger als 180° auf ein ausreichendes Drehmoment zum Zwecke eines Durchtrennens des Walzprodukts 12 beschleunigt werden. Dadurch können in rascher zeitlicher Abfolge dicke Walzprodukte 12 und/oder Walzprodukte mit hoher Festigkeit zuverlässig und sicher getrennt werden.

Ferner weist das vorliegend beschriebene Ausführungsbeispiel der Rotationsschere 10 eine Entnahmevorrichtung 28 auf. In diese Entnahmevorrichtung 28 sind mittels der Rotationsschere 10 abgetrennte Abschnitte 30 des durchlaufenden Walzprodukts 12 aufnehmbar. Beispielhaft ist die genannte Entnahmevorrichtung 28 unterhalb der Durchlaufebene 14 angeordnet. Des Weiteren weist das vorliegend beschriebene Ausführungsbeispiel der Rotationsschere 10 eine Markiervorrichtung 32 auf. Mittels dieser ist ein Identifizierungsmerkmal an einen abgetrennten Abschnitt 30 des Walzprodukts 12 anbringbar. Beispielhaft ist diese Markiervorrichtung 32 vorliegend derart positioniert, dass ein abgetrennter Abschnitt 30 auf einem Weg in die Entnahmevorrichtung 28 mit den Identifizierungsmerkmal versehen wird. Alternativ oder zusätzlich kann die Markiervorrichtung 32 als Teil eines jeden der zwei Obermesser 20 und/oder als Teil eines jeden der zwei Untermesser 22 ausgeführt ist. Überdies weist das vorliegend beschriebene Ausführungsbeispiel der Rotationsschere 10 eine Hebevorrichtung 34 auf. Mittels der Hebevorrichtung 34 ist ein Abschnitt des Walzprodukts 12 über die Durchlaufebene 14 anhebbar. Wird beispielsweise eine weitere Abfuhr des Walzprodukts 12 hin zu einer der Haspeln 40 aufgrund eines Fehlerfalls an einer der Haspeln 40 behindert, kann mittels der Hebevorrichtung 34 auf einfache Weise ein das Fortkommen eines folgenden Walzprodukts 12 hindernder Teil eines vorausgehenden Teils des Walzprodukts 12 angehoben werden. Eine Betriebsunterbrechung kann dadurch verhindert werden.

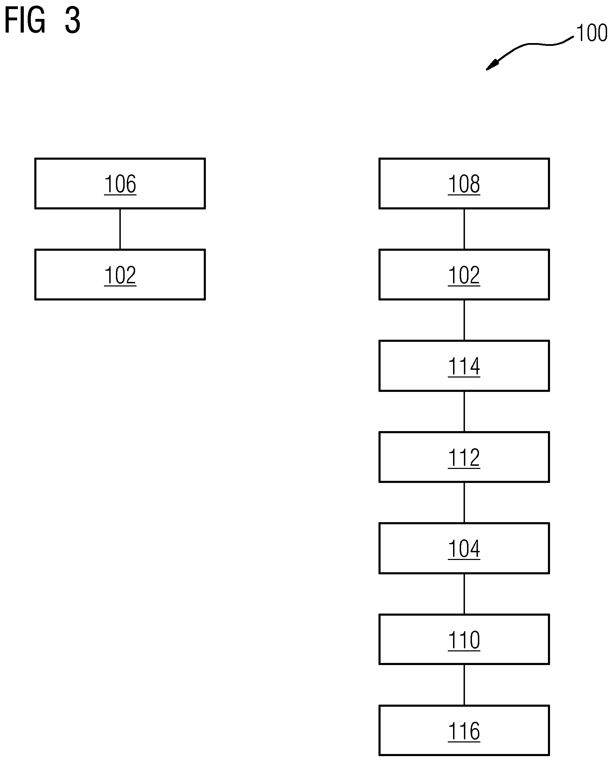

Figur 3 illustriert ein Beispiel eines Verfahrens 100 zum Betrieb des im Zusammenhang mit Figuren 1 und 2 beschriebenen Ausführungsbeispiels der Rotationsschere 10.

Wie bereits beschrieben, wird das Walzprodukt 12 mittels des Ausführungsbeispiels der Rotationsschere 10 in einer Richtung quer zu dessen Durchlaufrichtung 24 durch die Rotationsschere 10 getrennt 102. Eine Trennung 102 des Walzprodukts 12 erfolgt vorliegend dadurch, dass eines der zwei auf dem ersten Messerhalter 16 angeordneten Obermessern 20 und eines der zwei auf dem weiteren Messerhalter 18 angeordneten Untermessern 22 über einen Winkelbereich von bis 180° beschleunigt wird und paarweise zusammenwirken. Dadurch können rasch aufeinanderfolgende Trennvorgänge realisiert werden.

Ferner sieht das vorliegend beschriebene Beispiel des Verfahrens 100 vor, dass das Walzprodukt 12 nach einer Bearbeitung in der Fertigwalzgerüstgruppe 42 getrennt wird 102. Dadurch kann das Walzprodukt 12 nach einem Erreichen der Zieldicke getrennt werden. Dies ermöglicht es, das Walzprodukt 12 nach einem Erreichen einer geringsten Dicke effizient und energiesparend zu trennen 102.

In einem Betriebszustand erster Art 106 der Rotationsschere 10 ist vorgesehen, dass das Walzprodukt 12 getrennt wird 102, bevor eine maximale Aufnahmekapazität einer der zwei Haspeln 40 erreicht wird. Dadurch kann eine Herstellung von dicken Walzprodukten 12 und/oder solchen mit hoher Festigkeit auf dieselbe Weise durchgeführt werden, wie dies bereits für dünne Walzprodukte 12 und/oder solche mit geringer Festigkeit bekannt ist.

Ferner ist vorgesehen, dass in einem Betriebszustands zweiter Art 108 von dem Walzprodukt 12 kurze Abschnitte 30 mit einer Länge von höchstens 1 m abgetrennt werden 102. In dem Betriebszustand zweiter Art 108 ist vorliegend ferner vorgesehen, dass die genannten kurzen Abschnitte 30 des Walzprodukts 12 nach einem Trennen 102 aus der Durchlaufebene 14 entnommen werden 110. Vorteilhafterweise werden die kurzen Abschnitte 30 unter die Durchlaufebene 14 geleitet 112. Auf diese Weise werden vorliegend die kurzen Abschnitte 30 der Entnahmevorrichtung 28 zugeführt 116.

Der Betriebszustand zweiter Art 108 kann während eines Normalbetriebs der Walzvorrichtung 36 zum Zwecke der Probenahme vorgesehen sein. Alternativ oder zusätzlich kann der Betriebszustand zweiter Art 108 in einem Fehlerfall eingesetzt werden, um einen Weiterbetrieb der Walzvorrichtung 36 oder der nicht näher dargestellten Gießwalzanlage zu ermöglichen. Im bevorzugten Anwendungsfall kann ein Arbeitsraum für eine Ausfuhreinrichtung auf diese Weise freigeschafft werden oder diese durch die vorliegend beschriebene Rotationsschere 10 ersetzt werden.

Im Falle der Probenahme sieht das vorliegend beschriebene Beispiel des Verfahrens 100 vor, dass die von den Walzprodukt 12 abgetrennten Abschnitte 30 mit einem Identifizierungsmerkmal versehen werden 104. Dadurch können die für die Probenahme vorgesehenen Abschnitte 30 eindeutig identifiziert werden. Des Weiteren kann dadurch eine Qualitätssicherung auf eine zuverlässige und effiziente Weise durchgeführt werden.

Ferner sieht das vorliegende Beispiel des Verfahrens 100 vor, dass im Fehlerfall ein Abschnitt des Walzprodukts über eine Durchlaufebene 14 angehoben wird 114. Eine Unterbrechung eines Betriebs der Walzvorrichtung 36 oder einer nicht näher dargestellten Gießwalzanlage kann dadurch vermieden werden. Überdies können die abgetrennten Abschnitte 30 dadurch auf einfache Weise unter die Durchlaufebene 14 geleitet 112 und der Entnahmevorrichtung 28 zugeführt werden. 116. Gegebenenfalls kann auf diese Weise die Probenahme während eines Fehlerfalls ermöglicht werden. Dadurch kann ein besonders effizienter Betrieb der Walzvorrichtung 36 erreicht werden.

Obwohl die Erfindung im Detail durch die bevorzugten Ausführungsbeispiele und dessen Variationen näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Rotationsschere
- 12: Walzprodukt
- 14: Durchlaufebene
- 16: erster Messerhalter
- 18: weiterer Messerhalter
- 20: Obermesser
- 22: Untermesser
- 24: Durchlaufrichtung
- 26: Drehpunkt
- 28: Entnahmevorrichtung
- 30: abgetrennter Abschnitt
- 32: Markiervorrichtung
- 34: Hebevorrichtung
- 36: Walzvorrichtung
- 38: Walzgerüstgruppe
- 40: Haspel
- 42: Fertigwalzgerüstgruppe
- 44: Vorwalzgerüstgruppe
- 46: Hochgeschwindigkeitsschere

- 100: Verfahren
- 102: Trennen
- 104: mit Identifizierungsmerkmal versehen
- 106: Betriebszustand erster Art
- 108: Betriebszustand zweiter Art
- 110: Entnehmen
- 112: unter Durchlaufebene leiten
- 114: über Durchlaufebene anheben
- 116: Entnahmevorrichtung zuführen

## Patentansprüche

1. Rotationsschere (10) zum Trennen eines durchlaufenden Walzprodukts (12) aufweisend:
- einen oberhalb einer Durchlaufebene (14) angeordneten ersten Messerhalter (16), welcher mit zwei Obermessern (20) versehen ist;
- einen unterhalb der Durchlaufebene (14) angeordneten weiteren Messerhalter (18), welcher mit zwei Untermessern (22) versehen ist;
- wobei zum Zwecke eines Trennens des Walzprodukts (12) in einer Richtung quer zu einer Durchlaufrichtung (24) des Walzprodukts (12) jeweils paarweise eines der zwei Obermesser (20) und eines der zwei Untermesser (22) vorgesehen ist.

2. Rotationsschere (10) nach Anspruch 1,
**dadurch gekennzeichnet, dass**
die zwei Obermesser (20) relativ zueinander im Wesentlichen um einen Winkel von 180° um einen Drehpunkt (26) des ersten Messerhalters (16) und/oder die zwei Untermesser (22) relativ zueinander im Wesentlichen um einen Winkel von 180° um einen Drehpunkt (26) des weiteren Messerhalters (18) versetzt angeordnet sind.

3. Rotationsschere (10) nach einem der Ansprüche 1 oder 2,
**dadurch gekennzeichnet, dass**
eine Entnahmevorrichtung (28) vorgesehen ist, in welche durch die Rotationsschere (10) abgetrennte Abschnitte (30) des durchlaufenden Walzprodukts (12) aufnehmbar sind.

4. Rotationsschere (10) nach einem der vorhergehenden Ansprüche,
**dadurch gekennzeichnet, dass**
eine Markiervorrichtung (32) vorgesehen ist, mittels welcher ein Identifizierungsmerkmal an einem abgetrennten Abschnitt (30) des Walzprodukts (12) anbringbar ist.

5. Rotationsschere (10) nach einem der vorhergehenden Ansprüche,
**dadurch gekennzeichnet, dass**
eine Hebevorrichtung (34) vorgesehen ist, mittels welcher ein Abschnitt des Walzprodukts (12) über die Durchlaufebene (14) anhebbar ist.

6. Walzvorrichtung (36) aufweisend:
- mehrere Walzgerüstgruppen (38);
- wenigstens eine Haspel (40) zur Aufnahme eines Walzprodukts (12);
- Rotationsschere (10) nach einem der vorhergehenden Ansprüche, welche zwischen einer letzten der mehreren Walzgerüstgruppen (38) sowie der wenigstens einen Haspel (40) angeordnet ist.

7. Verfahren (100) zum Betrieb einer Rotationsschere (10) nach einem der Ansprüche 1 bis 5, bei welchem ein Walzprodukt (12) in einer Richtung quer zu dessen Durchlaufrichtung (24) durch die Rotationsschere (10) mittels eines von zwei auf einem ersten Messerhalter (16) angeordneten Obermessern (20) und eines von zwei auf einem weiteren Messerhalter (18) angeordneten Untermessern (22) getrennt wird (102).

8. Verfahren (100) nach Anspruch 7,
bei welchem das Walzprodukt (12) nach einer Bearbeitung in einer Fertigwalzgerüstgruppe (42) getrennt wird (102).

9. Verfahren (100) nach einem der Ansprüche 7 oder 8,
bei welchem ein Walzprodukt (12) mit einer Dicke von mindestens 4 mm, vorzugsweise von mindestens 15 mm und besonders bevorzugt von mindestens 25 mm getrennt wird (102).

10. Verfahren (100) nach einem der Ansprüche 7 bis 9,
bei welchem ein von dem Walzprodukt (12) abgetrennter (102) Abschnitt (30) mit einem Identifizierungsmerkmal versehen wird (104).

11. Verfahren (100) nach einem der Ansprüche 7 bis 10,
in einem Betriebszustand erster Art (106) das Walzprodukt (12) getrennt wird (102), bevor eine maximale Aufnahmekapazität einer Haspel (40) erreicht wird.

12. Verfahren (100) nach einem der Ansprüche 7 bis 11,
bei welchem in einem Betriebszustand zweiter Art (108) von einem Walzprodukt (12) kurze Abschnitte (30) mit einer Länge von höchstens 2 m, vorzugsweise von höchstens 1 m und besonders bevorzugt von höchstens 0,5 m abgetrennt werden (102).

13. Verfahren (100) nach Anspruch 12,
bei welchem die kurzen Abschnitte (30) nach einem Trennen (102) entnommen werden (110), und zwar vorzugsweise derart, dass die kurzen Abschnitte (30) unter die Durchlaufebene (14) geleitet werden (112).

14. Verfahren (100) nach einem der Ansprüche 12 oder 13,
bei welchem ein Abschnitt des Walzprodukts (12) über eine Durchlaufebene (14) angehoben wird (114).

15. Verfahren (100) nach einem der Ansprüche 12 bis 14,
bei welchem die kurzen Abschnitte (30) einer Entnahmevorrichtung (28) zugeführt werden (116).
